**Europäisches Patentamt**

**European Patent Office**

**Office européen des brevets**

(19)

(11) Veröffentlichungsnummer: **0 382 870 B1**

# EUROPÄISCHE PATENTSCHRIFT

(45) Veröffentlichungstag der Patentschrift: **14.10.92**

(51) Int. Cl.5: **B60R 22/36**

(21) Anmeldenummer: **89102718.7**

(22) Anmeldetag: **17.02.89**

---

(54) **Sicherheitsgurtaufroller.**

---

(43) Veröffentlichungstag der Anmeldung:
**22.08.90 Patentblatt 90/34**

(45) Bekanntmachung des Hinweises auf die
Patenterteilung:
**14.10.92 Patentblatt 92/42**

(84) Benannte Vertragsstaaten:
**AT BE DE ES FR GB IT NL SE**

(56) Entgegenhaltungen:
**DE-A- 3 338 187**
**GB-A- 2 071 993**
**US-A- 3 206 137**

(73) Patentinhaber: **TRW REPA GMBH**
**Industriestrasse 20**
**W-7077 Alfdorf(DE)**

(72) Erfinder: **Föhl, Artur**
**Auf der Halde 28**
**W-7060 Schorndorf(DE)**

(74) Vertreter: **Degwert, Hartmut, Dipl.-Phys. et al**
**Patent Attorneys Prinz, Leiser, Bunke & Part-**
**ner Manzingerweg 7**
**W-8000 München 60(DE)**

---

## Beschreibung

Die Erfindung betrifft einen Sicherheitsgurtaufroller mit einer in einem Gehäuse drehbar gelagerten Gurtspule, einem mindestens gurtbandsensitiven Sperrmechanismus zwischen Gehäuse und Gurtspule und einer Auslösevorrichtung, die einen am Gehäuse schwenkbar gelagerten Betätigungshebel für den Sperrmechanismus, einen innenverzahnten Steuerring, der am Gehäuse drehbar gelagert ist und an den der Betätigungshebel angeschlossen ist, einer an der Gurtspule schwenkbar gelagerte Steuerklinke, die mit der Innenverzahnung des Steuerringes zusammenwirkt, ein an der Gurtspule drehbar gelagertes Steuerrad, das einen Betätigungsnocken für die Steuerklinke trägt, und eine an die Steuerscheibe angeschlossene Massescheibe umfaßt.

Sicherheitsgurtaufroller dieser Art sind in zahlreichen Ausführungen bekannt, z. B. aus DE-A-3 338 187. Das Steuerrad bleibt mit der an dieses angeschlossenen Massescheibe bei plötzlichem Gurtbandabzug hinter der Drehbewegung der Gurtspule zurück und drückt mit seinem Betätigungsnocken die Steuerklinke in Eingriff mit der Innenverzahnung des Steuerringes. Die Drehbewegung des dann mit der Gurtspule gekoppelten Steuerringes führt zur Verschwenkung des Betätigungshebels, welcher seinerseits den Sperrmechanismus des Gurtaufrollers aktiviert.

Der Erfindung liegt die Aufgabe zugrunde, eine unerwünschte Aktivierung des Sperrmechanismus in bestimmten Situationen zu verhindern.

Diese Aufgabe wird bei einem Sicherheitsgurtaufroller der eingangs angegebenen Art erfindungsgemäß dadurch gelöst, daß die Massescheibe über eine auf Fliehkraft ansprechende Kupplung an das Steuerrad angeschlossen ist und daß die Kupplung bei Überschreiten einer vorbestimmten Fliehkraft die Verbindung zwischen Massescheibe und Steuerrad löst. Solange die vorbestimmte Fliehkraft, die einer bestimmten Drehgeschwindigkeit der Gurtspule entspricht, nicht überschritten ist, bleibt die Kupplung geschlossen, so daß die Massescheibe drehfest mit dem Steuerrad verbunden ist. Erst bei Überschreiten einer bestimmten Fliehkraft bzw. Drehgeschwindigkeit der Gurtspule löst sich die Massescheibe von dem Steuerrad, so daß beide relativ zueinander verdrehbar sind.

Durch diese erfindungsgemäße Ausgestaltung des Sicherheitsgurtaufrollers wird eine unerwünschte Aktivierung des Sperrmechanismus verhindert, die bei herkömmlichen Sicherheitsgurtaufrollern auftreten kann, wenn die Gurtspule in Aufrollrichtung mit relativ hoher Drehzahl rotiert und dann plötzlich angehalten wird. Eine solche Situation kann bei Sicherheitsgurtaufrollern auftreten, wenn eine relativ große Gurtbandlänge beispielsweise manuell vom Gurtaufroller abgezogen wird und das Gurtband dann plötzlich freigegeben wird, so daß es ohne große Behinderung unter der Wirkung der Aufrollfeder wieder auf der Gurtspule aufgerollt wird. Bei besonders leichtgängigen und reibungsarmen Sicherheitsgurtsystemen kann die Gurtspule in einer solchen Situation eine hohe Drehzahl erreichen, bis das Gurtband aufgerollt ist und die Gurtspule dann plötzlich abgebremst wird. Die an das Steuerrad gekoppelte Massescheibe ist aber bestrebt, die Drehbewegung fortzusetzen, so daß auch das Steuerrad relativ zur Gurtspule verdreht wird. Die dann auftretende Relativdrehung zwischen Gurtspule und Steuerrad entspricht derselben Relativdrehung, die zu einer gurtbandsensitiven Auslösung des Sperrmechanismus führt. Infolgedessen kann nach dem plötzlichen Abbremsen der Gurtspule der Sperrmechanismus aktiviert sein. Eine solche Aktivierung des Sperrmechanismus ist unerwünscht, da sie zumindest das Anlegen des Sicherheitsgurtes behindert. Bei herkömmlichen Sicherheitsgurtaufrollern wurde diese unerwünschte Aktivierung des Sperrmechanismus dennoch in Kauf genommen, weil die Möglichkeit besteht, den Sperrmechanismus zu inaktivieren, indem am Gurtband gezogen wird und die durch Straffung des Gurtbandwickels freigewordene Gurtbandlänge wieder aufgerollt wird, was stets zur Inaktivierung des Sperrmechanismus führt.

Bei dem erfindungsgemäß ausgebildeten Sicherheitsgurtaufroller wird hingegen vermieden, daß die Massescheibe eine hohe Drehgeschwindigkeit erreichen kann, da sie bei einer bestimmten Drehzahl des Steuerrades von diesem abgekoppelt wird.

Besonders vorteilhaft ist die Verwendung eines erfindungsgemäßen Sicherheitsgurtaufrollers in einem Sicherheitsgurt-Rückhaltesystem, bei welchem ein Höhenversteller für den oberen Umlenkbeschlag des Schultergurtes oberhalb des Sicherheitsgurtaufrollers angeordnet ist und die Höhenverstellung des Umlenkbeschlages mit der Längsverstellung des zugeordneten Fahrzeugsitzes zwangsgekoppelt ist. Wenn in einem solchen Rückhaltesystem ein herkömmlicher Sicherheitsgurtaufroller verwendet wird und eine unbeabsichtigte Aktivierung des Sperrmechanismus eintritt, kann der Versuch einer Längsverstellung des Fahrzeugsitzes zu Beschädigungen führen, da eine Sitzverstellung nach hinten zu einer Hochverlagerung des Umlenkbeschlages führt, was aber nur möglich ist, wenn Gurtband von der Gurtspule abgezogen werden kann. Bei aktiviertem Sperrmechanismus werden alle Teile des Verstellmechanismus extrem hohen Beanspruchungen ausgesetzt.

Die erfindungsgemäße Ausbildung des Sicherheitsgurtaufrollers ist aber auch dann von Vorteil, wenn der Sicherheitsgurtaufroller mit einer Rückstrammeinrichtung kombiniert ist, die im aktivierten Zustand an der Gurtspule angreift. Wenn die Rückstrammvorrichtung aktiviert wird, erfolgt die Drehung der Gurtspule in Aufrollrichtung mit extrem hoher Drehgeschwindigkeit. Durch die erfindungsgemäße Ausgestaltung wird vermieden, daß die Massescheibe ähnlich hohe Drehzahlen erreicht, was gegen Ende des Rückstrammvorganges zu schwer beherrschbaren Trägheitskräften führen würde.

Gemäß einer vorteilhaften Ausführungsform der Erfindung, die sich durch Einfachheit und eine geringe Anzahl von für die fliehkraftabhängig arbeitende Kupplung benötigten Teilen auszeichnet, ist die Massescheibe auf einer Nabe des Steuerrades drehbar gelagert, und die Nabe weist einen Fortsatz auf, auf dem ein erstes Formschlußteil der Kupplung drehfest angeordnet ist, während ein zweites, mit dem ersten zusammenwirkendes Formschlußteil der Kupplung an der Massescheibe gelagert ist. Die beiden Kupplungsteile werden vorzugsweise als außenverzahntes Kupplungsrad und exzentrisch an der Massescheibe gelagerte Klinke ausgebildet.

Weitere Merkmale und Vorteile der Erfindung ergeben sich aus der Beschreibung mehrerer Ausführungsformen der Erfindung und aus der Zeichnung, auf die Bezug genommen wird. In der Zeichnung zeigen:

Fig. 1 eine perspektivische Ansicht einer ersten Ausführungsform des Sicherheitsgurtaufrollers in Teile-Explosionsansicht;

Fig. 2 eine schematische Seitenansicht der Kupplung der in Figur 1 gezeigten Ausführungsform;

Fig. 3 eine Schnittansicht der in Figur 2 gezeigten Kupplung;

Fig. 4 und 5 zwei weitere Ausführungsformen einer Kupplung des Sicherheitsgurtaufrollers in Seitenansicht; und

Fig. 6 eine schematische Darstellung eines Sicherheitsgurt-Rückhaltesystems mit Höhenversteller für einen Umlenkbeschlag und erfindungsgemäß ausgebildetem Sicherheitsgurtaufroller.

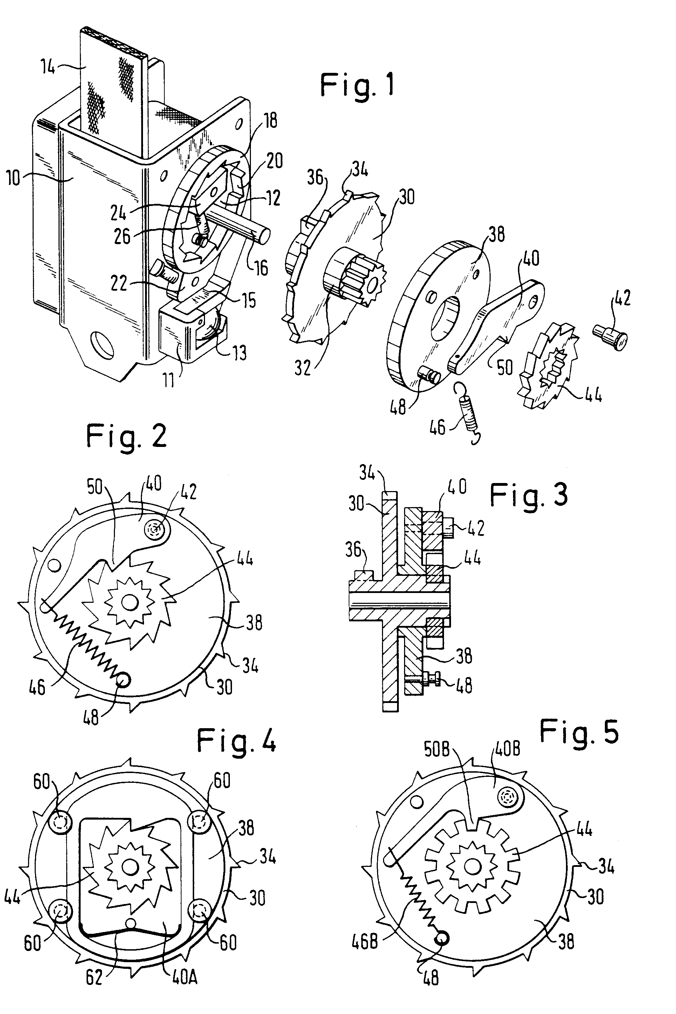

In dem Gehäuse 10 des in Figur 1 gezeigten Sicherheitsgurtaufrollers ist eine Gurtspule 12 drehbar gelagert, auf der das Gurtband 14 aufgewickelt wird. Die Gurtspule 12 besitzt auf einer Seite einen wellenförmigen Fortsatz 16. Auf derselben Seite ist an der einen Außenseite des Gehäuses 10 ein Steuerring 18 drehbar gelagert. Der Steuerring 18 ist mit einer Innenverzahnung 20 versehen. An den Steuerring 18 ist ein Betätigungshebel 22 fest angeschlossen. Weiterhin ist auf derselben Seite der Gurtspule 12 eine Steuerklinke 24 schwenkbar gelagert. Die Steuerklinke 24 wird durch eine Druckfeder 26 in einer Ruhestellung außer Eingriff mit der Innenverzahnung 20 gehalten. Der Betätigungshebel 22 wirkt mit einem nicht dargestellten, herkömmlich ausgebildeten Sperrmechanismus zusammen, der zwischen Gehäuse 10 und Gurtspule 12 angeordnet ist. Auf dem wellenförmigen Fortsatz 16 der Gurtspule 12 ist ein Steuerrad 30 mittels einer Nabe 32 drehbar gelagert. Das Steuerrad trägt an seinem Außenumfang eine Steuerverzahnung 34. Die Nabe 32 trägt auf ihrer der Gurtspule zugewandten Seite einen Betätigungsnocken 36, der mit der Steuerklinke 24 zusammenwirkt. Auf der Nabe 32 ist eine Massescheibe 38 drehbar gelagert. An der einen Seitenfläche der Massescheibe 38 ist eine Kupplungsklinke 40 exzentrisch verschwenkbar auf einem Stift 42 gelagert. Ein Kupplungszahnrad 44, das mit einer Außenverzahnung versehen ist, ist drehbar auf das von dem Betätigungsnocken 36 abgewandte Ende der Nabe 32 aufgesetzt. Eine Zugfeder 46, die zwischen dem freien Ende der Kupplungsklinke 40 und einem Zapfen 48 auf der Seitenfläche der Massescheibe 38 eingehängt ist, beaufschlagt den Kupplungszahn 50 der Kupplungsklinke 40 in Eingriff mit der Außenverzahnung des Kupplungszahnrades 44.

Die Kupplungsklinke 40 und das Kupplungszahnrad 44 bilden eine Kupplung, durch welche die Massescheibe 38 drehfest an das Steuerrad 30 angeschlossen ist, solange der Kupplungszahn 50 mit der Außenverzahnung des Kupplungszahnrades 44 in Eingriff steht. Da die Kupplungsklinke 40 exzentrisch an der Massescheibe 38 gelagert ist, wirkt der Zugfeder 46 bei zunehmender Drehzahl der Kupplungsklinke 40 eine Fliehkraft entgegen. Wenn die Fliehkraft einen vorbestimmten Wert erreicht hat, überwindet sie die Kraft der Zugfeder 46, so daß der Kupplungszahn 50 aus der Außenverzahnung des Kupplungszahnrades 44 austritt. Die Massescheibe 38 ist dann von dem Steuerrad 30 entkoppelt. Es wird folglich vermieden, daß die Massescheibe 38 eine unerwünscht hohe Drehgeschwindigkeit erreicht und beim plötzlichen Abbremsen der Gurtspule Trägheitskräfte von der Massescheibe 38 auf den Betätigungsnocken 36 übergehen, die eine unerwünschte Aktivierung des Sperrmechanismus bewirken würden.

Mit der Außenverzahnung 34 des Steuerrades 30 wirkt in bekannter Weise ein fahrzeugsensitiver Auslösemechanismus zusammen, der in Figur 1 mit der Bezugszahl 11 bezeichnet ist und eine auf einer Massekugel 13 aufliegende, am Gehäuse schwenkbar gelagerte Auslöseklinke 15 umfaßt.

Abweichend von der zuvor beschriebenen Ausführungsform ist bei der in Figur 4 gezeigten Ausführung die Kupplungsklinke 40A nicht schwenkbar, sondern in Radialrichtung translationsverschiebbar, aber gleichfalls exzentrisch an der Seite der Massescheibe 38 gelagert. Die Translationsbewegung der Kupplungsklinke 40A wird durch vier Bundbolzen 60 reibungsarm geführt. Die Kupplungsklinke 40A wird durch eine Blattfeder 62 in ihre Eingriffsstellung mit der Außenverzahnung des Kupplungszahnrades 44 beaufschlagt.

Bei der in Figur 5 gezeigten Ausführungsform besitzen die Zähne der Außenverzahnung des Kupplungszahnrades 44 Trapezform, ebenso wie der Kupplungszahn 50B der Kupplungsklinke 40B. Bei dieser Ausführungsform kann die Zugfeder 46B erheblich schwächer dimensioniert werden als bei der Ausführungsform nach den Figuren 1 bis 3. Andererseits läßt sich durch die Ausbildung der Verzahnung nach den Figuren 1 bis 4 eine Freilaufwirkung zwischen Massescheibe 38 und Steuerrad 30 erzielen.

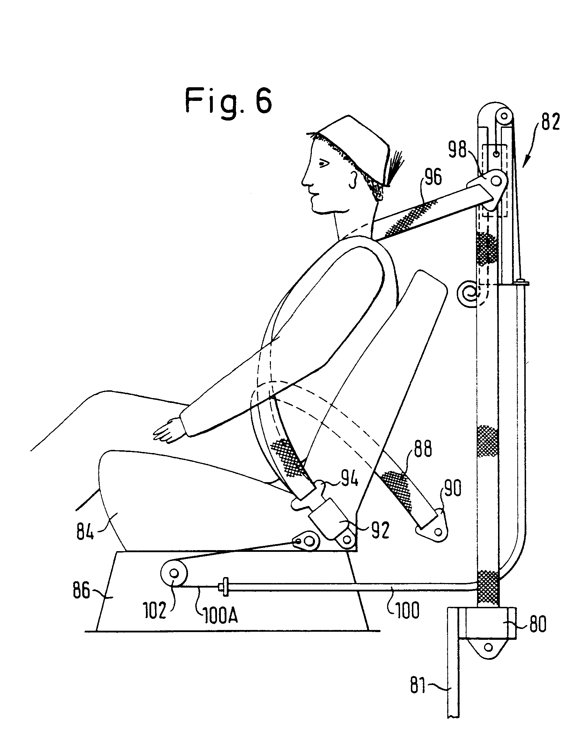

Bei dem in Figur 6 schematisch gezeigten Sicherheitsgurt-Rückhaltesystem ist ein Sicherheitsgurtaufroller 80 der vorstehend beschriebenen Art etwa senkrecht unter einem Höhenversteller angeordnet, der allgemein mit 82 bezeichnet ist. Der Höhenversteller 82 ist mit einem längsverstellbaren Fahrzeugsitz 84 zwangsgekoppelt. Der Fahrzeugsitz 84 ist in bekannter Weise an einem chassisfesten Führungsteil 86 längs verschiebbar und in den verschiedenen Längsstellungen arretierbar. Der Beckengurt 88 verläuft zwischen einem chassisfesten Verankerungsbeschlag 90 und einem Schloßbeschlag, an dem ein Gurtschloß 92 befestigt ist, in welches eine Steckzunge 94 eingesteckt wird. Der Schultergurt 96 verläuft zwischen der Steckzunge 94 und einem oberen Umlenkbeschlag 98. Dieser obere Umlenkbeschlag 98 ist an einem höhenverstellbaren Schlitten verankert. Dieser Schlitten ist über einen Seilzug 100 mit dem Fahrzeugsitz 84 gekoppelt. Das Zugseil 100A greift an seinem einen Ende an den Schlitten des Höhenverstellers 82 und an seinem anderen Ende, das über eine Umlenkrolle 102 geführt ist, an dem Fahrzeugsitz 84 an. Der Sicherheitsgurtaufroller 80 weist nicht nur die vorstehend beschriebenen Besonderheiten auf, sondern ist auch mit einer Rückstrammvorrichtung 81 ausgestattet, die im aktivierten Zustand an der Gurtspule des Sicherheitsgurtaufrollers angreift.

Wenn bei dem in Figur 6 gezeigten System der Benutzer des Sicherheitsgurtes den Schultergurt 96 erfaßt, Gurtband von dem Sicherheitsgurtaufroller 80 abzieht und dann das Gurtband plötzlich losläßt, wird das Gurtband durch die im Inneren des Sicherheitsgurtaufrollers 80 vorhandene Aufwickelfeder auf der Gurtspule aufgerollt. Bei diesem Vorgang kann die Gurtspule eine relativ hohe Drehzahl erreichen. Das Steuerrad 30 und die Massescheibe 38 (Figur 1) folgen dieser Drehbewegung, jedoch wird bei einer bestimmten Drehzahl die Massescheibe 38 von dem Steuerrad 30 entkoppelt, weil die Kupplungsklinke 40 durch die an ihr wirkenden Fliehkräfte aus der Außenverzahnung des Kupplungszahnrads 44 austritt. Auf diese Weise wird vermieden, daß gegen Ende des Aufrollvorganges, wenn die Gurtspule plötzlich abgebremst wird, das Steuerrad 30 weitergedreht wird und über seinen Betätigungsnocken 36 die Steuerklinke 24 in Eingriff mit der Innenverzahnung des Steuerrings 18 bewegt, um über den Betätigungshebel 22 den Sperrmechanismus zu aktivieren. Auch bei einer Aktivierung der Rückstrammvorrichtung 81, bei welcher die Gurtspule gleichfalls in Aufrollrichtung gedreht wird und sehr hohe Drehzahlen erreichen kann, wird die Massescheibe 38 von dem Steuerrad 30 abgekoppelt. Es wird also sowohl eine Überbeanspruchung des Auslösemechanismus durch zu hohe Trägheitskräfte der Massescheibe 38 als auch eine ungewünschte Aktivierung des Sperrmechanismus vermieden. Bei dem in Figur 6 gezeigten System hätte eine unerwünschte Aktivierung des Sperrmechanismus eine Gefährdung des Antriebssystems für die Sitzverstellung und die Höhenverstellung zur Folge. Eine solche Gefährdung wird aber durch die erfindungsgemäße Ausbildung des Sicherheitsgurtaufrollers vermieden.

Es ist an dieser Stelle anzumerken, daß der erfindungsgemäß ausgebildete Sicherheitsgurtaufroller (80) auch bei Kombination mit einer an der Gurtspule angreifenden Rückstrammvorrichtung 81 nach beendigter Rückstrammung eine unverzögerte und zuverlässige Aktivierung des Sperrmechanismus gewährleistet. Zwar ist zu diesem Zeitpunkt die Massescheibe 38 von dem Steuerrad entkoppelt, weil die auf Fliehkraft ansprechende Kupplung die Verbindung schon in der Anfangsphase des Rückstrammvorganges löst, jedoch erreicht das Steuerrad 30 bei der Rückstrammung eine so hohe Drehzahl, daß die Massenträgheit allein des Steuerrades 30, auch wenn es aus leichtem Kunststoff gefertigt ist, zur sicheren Aktivierung des Sperrmechanismus ausreicht.

## Patentansprüche

1. Sicherheitsgurtaufroller (80) mit einer in einem Gehäuse (10) drehbar gelagerten Gurtspule (12), einem mindestens gurtbandsensitiven Sperrmechanismus zwischen Gehäuse und Gurtspule und einer Auslösevorrichtung, die umfaßt:
   - einen am Gehäuse schwenkbar gelagerten Betätigungshebel (22) für den Sperrmechanismus;
   - einen innenverzahnten Steuerring (18), der am Gehäuse (10) drehbar gelagert ist und an den der Betätigungshebel (22) angeschlossen ist;

- eine an der Gurtspule (12) schwenkbar gelagerte Steuerklinke (24), die mit der Innenverzahnung (20) des Steuerringes (18) zusammenwirkt;
- ein an der Gurtspule (12) drehbar gelagertes Steuerrad (30), das einen Betätigungsnocken (36) für die Steuerklinke (24) trägt; und
- eine an das Steuerrad angeschlossene Massescheibe (38);

dadurch gekennzeichnet, daß die Massescheibe (38) über eine auf Fliehkraft ansprechende Kupplung an das Steuerrad (30) angeschlossen ist und daß die Kupplung bei Überschreiten einer vorbestimmten Fliehkraft die Verbindung zwischen Massescheibe (38) und Steuerrad (30) löst.

2. Sicherheitsgurtaufroller (80) nach Anspruch 1, dadurch gekennzeichnet, daß die Massescheibe auf einer Nabe (32) des Steuerrades (30) drehbar gelagert ist, daß die Nabe (32) einen Fortsatz aufweist, auf dem ein erstes Formschlußteil (44) der Kupplung drehfest angeordnet ist, und daß ein zweites, mit dem ersten zusammenwirkendes Formschlußteil (40) der Kupplung an der Massescheibe (38) gelagert ist.

3. Sicherheitsgurtaufroller (80) nach Anspruch 2, dadurch gekennzeichnet, daß das erste Formschlußteil durch ein an seinem Außenumfang mit Formschlußgestaltungen versehenes Kupplungsrad (44) und das zweite Formschlußteil durch eine Klinke (40, 40A, 40B) gebildet ist.

4. Sicherheitsgurtaufroller (80) nach Anspruch 3, dadurch gekennzeichnet, daß die Klinke (40, 40B) an der Massescheibe exzentrisch schwenkbar gelagert ist.

5. Sicherheitsgurtaufroller (80) nach Anspruch 3, dadurch gekennzeichnet, daß die Klinke (40A) an der Massescheibe (38) radial translationsverschiebbar exzentrisch gelagert ist.

6. Sicherheitsgurtaufroller (80) nach Anspruch 3, 4 oder 5, dadurch gekennzeichnet, daß die Klinke (40) durch eine Feder (46) in Eingriff mit den Formschlußgestaltungen des Kupplungsrades (44) beaufschlagt ist.

7. Sicherheitsgurtaufroller (80) nach einem der vorstehenden Ansprüche, dadurch gekennzeichnet, daß das Steuerrad (30) an seinem Außenumfang mit Steuerzähnen (34) versehen ist, die mit einem fahrzeugsensitiven Trägheitssensor (13) über eine am Gehäuse schwenkbar gelagerte Steuerklinke (15) zusammenwirken.

8. Sicherheitsgurtaufroller (80) nach einem der vorstehenden Ansprüche, dadurch gekennzeichnet, daß er in ein Sicherheitsgurt-Rückhaltesystem integriert ist, bei welchem ein Höhenversteller (82) für den oberen Umlenkbeschlag (98) des Schultergurtes oberhalb des Sicherheitsgurtaufrollers angeordnet ist und die Höhenverstellung des Umlenkbeschlages (98) mit der Längsverstellung des zugeordneten Fahrzeugsitzes (84) zwangsgekoppelt ist (Fig. 6).

9. Sicherheitsgurtaufroller (80) nach einem der vorstehenden Ansprüche, dadurch gekennzeichnet, daß eine Rückstrammvorrichtung (81) vorgesehen ist, die im aktivierten Zustand an der Gurtspule angreift.

10. Sicherheitsgurtaufroller (80) nach einem der Ansprüche 3 bis 9, dadurch gekennzeichnet, daß die Formschlußgestaltungen eine trapezförmige Verzahnung bilden.

11. Sicherheitsgurtaufroller (80) nach einem der Ansprüche 3 bis 9, dadurch gekennzeichnet, daß die Formschlußgestaltungen eine Verzahnung bilden, die einen Freilaufeffekt zwischen den Kupplungsteilen zuläßt.

**Claims**

1. Safety belt retractor (80) comprising a belt spool (12) rotatably mounted in a housing (10), an at least webbing-sensitive blocking mechanism between housing and belt spool and a release means which includes:
   - an actuating lever (22) for the blocking mechanism mounted pivotally on the housing;
   - an internally toothed control ring (18) which is rotatably mounted on the housing (10) and to which the actuating lever (22) is connected;
   - a control pawl (24) which is pivotally mounted on the belt spool (12) and which cooperates with the internal toothing (20) of the control ring (18);
   - a control wheel (30) which is rotatably mounted on the belt spool (12) and which carries an actuating cam (36) for the control pawl (24); and
   - a mass disc (38) connected to the control wheel;

characterized in that the mass disc (38) is connected to the control wheel (30) via a coupling responsive to centrifugal force and that the coupling on exceeding a predetermined centrifugal force disengages the connection between the mass disc (38) and control wheel (30).

2. Safety belt retractor (80) according to claim 1, characterized in that the mass disc is rotatably mounted on a hub (32) of the control wheel (30), that the hub (32) comprises an extension on which a first form-locking part (44) of the coupling is non-rotatably arranged and that a second form-locking part (40) of the coupling cooperating with the first is mounted on the mass disc (38).

3. Safety belt retractor (80) according to claim 2, characterized in that the first form-locking part is formed by a coupling wheel (44) provided at its outer periphery with form-locking configurations and the second form-locking part is formed by a pawl (40, 40A, 40B).

4. Safety belt retractor (80) according to claim 3, characterized in that the pawl (40, 40B) is pivotally mounted eccentrically on the mass disc.

5. Safety belt retractor (80) according to claim 3, characterized in that the pawl (40A) is mounted eccentrically for radial translational movement on the mass disc (38).

6. Safety belt retractor (80) according to claim 3, 4 or 5, characterized in that the pawl (40) is urged by a spring (46) into engagement with the form-locking configurations of the coupling wheel (44).

7. Safety belt retractor (80) according to any one of the preceding claims, characterized in that the control wheel (30) is provided at its outer periphery with control teeth (34) which cooperate with a vehicle-sensitive inertia sensor (13) via a control pawl (15) pivotally mounted on the housing.

8. Safety belt retractor (80) according to any one of the preceding claims, characterized in that it is integrated into a safety belt restraining system in which a vertical adjuster (82) for the upper deflection fitting (98) for the shoulder belt is arranged above the safety belt retractor and the vertical adjustment of the deflection fitting (98) is coupled in constrained manner to the longitudinal adjustment of the associated vehicle seat (84) (Fig. 6).

9. Safety belt retractor (80) according to any one of the preceding claims, characterized in that a tightening means (81) is provided which in the activated state engages the belt spool.

10. Safety belt retractor (80) according to any one of claims 3 to 9, characterized in that the form-locking configurations form a trapezoidal toothing.

11. Safety belt retractor (80) according to any one of claims 3 to 9, characterized in that the form-locking configurations form a toothing which permits a freewheel effect between the coupling parts.

**Revendications**

1. Enrouleur (80) de ceinture de sécurité comportant une bobine de sangle (12) montée de manière à pouvoir tourner dans un boîtier (10), un mécanisme de blocage sensible au moins à la sangle entre le boîtier et la bobine de sangle et un dispositif de déclenchement qui comprend :
   - un levier (22) monté de manière à pouvoir pivoter sur le boîtier pour l'actionnement du mécanisme de blocage ;
   - une couronne de commande (18) à denture intérieure, qui est montée de manière à pouvoir tourner sur le boîtier (10) et à laquelle le levier d'actionnement (22) est raccordé ;
   - un cliquet de commande (24), monté de manière à pouvoir pivoter sur la bobine de sangle (12), qui coopère avec la denture intérieure (20) de la couronne de commande (18) ;
   - une roue de commande (30) , montée de manière à pouvoir tourner sur la bobine de sangle (12), qui porte une came d'actionnement (36) du cliquet de commande (24) ; et
   - un disque d'inertie (38) relié à la roue de commande ;
   
   caractérisé en ce que le disque d'inertie (38) est relié à la roue de commande (30) par un accouplement réagissant à la force centrifuge et en ce que l'accouplement défait la liaison entre le disque d'inertie (38) et la roue de commande (30) lorsqu'une force centrifuge prédéterminée est dépassée.

2. Enrouleur (80) de ceinture de sécurité suivant la revendication 1, caractérisé en ce que le disque d'inertie est monté de manière à pouvoir tourner sur un moyeu (32) de la roue de commande (30), en ce que le moyeu (32) présente un prolongement sur lequel une première pièce (44) à engagement positif de l'accouplement est disposée de manière à résister à la torsion, et en ce qu'une seconde pièce (40) à engagement positif de l'accouplement, coopérant avec la première, est montée sur le disque d'inertie (38).

3. Enrouleur (80) de ceinture de sécurité suivant la revendication 2, caractérisé en ce que la première pièce à engagement positif est formée par une roue d'accouplement (44) présentant à sa périphérie des profilages pour engagement positif et la seconde pièce à engagement positif est formée par un cliquet (40, 40A, 40B).

4. Enrouleur (80) de ceinture de sécurité suivant la revendication 3, caractérisé en ce que le cliquet (40, 40B) est monté de manière à pouvoir pivoter excentriquement sur le disque d'inertie.

5. Enrouleur (80) de ceinture de sécurité suivant la revendication 3, caractérisé en ce que le cliquet (40A) est monté excentriquement de manière à pouvoir exécuter un mouvement de translation radiale sur le disque d'inertie (38).

6. Enrouleur (80) de ceinture de sécurité suivant la revendication 3, 4 ou 5, caractérisé en ce que le cliquet (40) est mis en prise par un ressort (46) avec les profilages pour engagement positif de la roue d'accouplement (44).

7. Enrouleur (80) de ceinture de sécurité suivant l'une des revendications précédentes, caractérisé en ce que la roue de commande (30) présente à sa périphérie des dents de commande (34) qui coopèrent par l'intermédiaire d'un cliquet de commande (15) monté pivotant sur le boîtier avec un détecteur d'inertie (13) sensible au véhicule.

8. Enrouleur (80) de ceinture de sécurité suivant l'une des revendications précédentes, caractérisé en ce qu'il est intégré en un système de retenue de ceinture de sécurité dans lequel un mécanisme de réglage en hauteur (82) pour le renvoi supérieur (98) de la sangle d'épaule est disposé au-dessus de l'enrouleur de ceinture de sécurité et le réglage en hauteur du renvoi (98) est en accouplement forcé avec le réglage longitudinal du siège (84) correspondant du véhicule (Fig. 6).

9. Enrouleur (80) de ceinture de sécurité suivant l'une des revendications précédentes, caractérisé en ce qu'il est prévu un dispositif de rétraction (81) qui agit sur la bobine de sangle lorsqu'il est actionné.

10. Enrouleur (80) de ceinture de sécurité suivant l'une des revendications 3 à 9, caractérisé en ce que les profilages pour engagement positif forment une denture en trapèze.

11. Enrouleur (80) de ceinture de sécurité suivant l'une des revendications 3 à 9, caractérisé en ce que les profilages pour engagement positif forment une denture qui admet un effet de roue libre entre les pièces d'accouplement.

Fig. 1

Fig. 2

Fig. 3

Fig. 4

Fig. 5

# Fig. 6